# EUROPEAN PATENT APPLICATION

(11) **EP 3 343 019 A1**
(43) Date of publication of application: **04.07.2018**
(21) Application number: 16838991.4
(22) Date of filing: 25.07.2016
(51) Int. Cl.: F02P 5/15, F02D 45/00, F02M 26/00

(54) **INTERNAL COMBUSTION ENGINE CONTROL DEVICE**

(30) Priority: 25.08.2015 JP 2015165356
(71) Applicant: Hitachi Automotive Systems, Ltd., Hitachinaka-shi, Ibaraki 312-8503 (JP)
(72) Inventor: ARIHARA Yoshinobu, Hitachinaka-shi Ibaraki 312-8503 (JP)
(74) Representative: MERH-IP Matias Erny Reichl Hoffmann Patentanwälte PartG mbB
(86) International application number: PCT/JP2016/071660
(87) International publication number: WO 2017/033644

(57) **Abstract**

Optimum fuel consumption and a stable combustion state are obtained by performing control to keep ignition always at an optimum timing such that ignition timing becomes MBT, without changing an EGR amount or an EGR rate that can realize the optimum fuel consumption rate. Therefore, in an internal combustion engine control device for controlling an internal combustion engine connected with a humidity sensor configured to detect humidity in an atmosphere and an ignition device configured to ignite an air-fuel mixture in a combustion chamber, the internal combustion engine control device includes a moisture amount calculation part configured to calculate an amount of moisture contained in intake air flowing into the combustion chamber according to a detection value of the humidity sensor; and an ignition timing control part configured to control ignition timing of the ignition device. In the internal combustion engine control device, the ignition timing control part controls the ignition timing of the ignition device so as to move in an advance direction as the amount of moisture in intake air calculated by the moisture amount calculation part increases.

## Description

### Technical Field

The present invention relates to a control device for a spark ignition type internal combustion engine.

### Background Art

In spark ignition type internal combustion engines (engines) used for automobiles and the like, improvement or the like of fuel economy and output is achieved by supplying fuel corresponding to an amount of intake air in accordance with an operation state of the engine, and igniting sparks at optimum timing.

In addition, as shown in JP 5-86988 A (PTL 1), it is generally known to reduce NOx, which is a harmful exhaust component, with exhaust gas recirculation (EGR) by providing an external EGR passage between an exhaust pipe and an intake pipe of the engine and circulating exhaust gas through the external EGR passage. In a device disclosed in the above publication, EGR gas cooled through the external EGR passage provided with an EGR cooler is introduced into a combustion chamber 106, to enable suppression of increase in combustion temperature, in addition to reduction of NOx. Such suppression of increase in combustion temperature is advantageous for improving combustion efficiency, suppressing knocking, improving reliability of a catalyst for exhaust purification, and the like.

### Citation List

### Patent Literature

PTL 1: JP 5-86988 A

### Summary of Invention

### Technical Problem

In the spark ignition type internal combustion engine described above, there are cases where fuel economy improvement cannot be derived due to misfire as a combustion state becomes unstable due to decrease in a combustion speed, or as an ignition failure of an air-fuel mixture occurs in the combustion introduced with the EGR gas. In such a case, for a state where the EGR gas is not introduced or a state where an amount of the EGR gas is small, ignitability and combustion stability can be improved by advancing (quickening) ignition timing and setting the ignition timing to minimum spark advance for best torque (MBT) having the best combustion efficiency.

The ignition timing to become the MBT is greatly influenced by an amount of moisture in intake air immediately before the combustion chamber 106, in which the EGR gas recirculated to the intake pipe from the exhaust pipe is mixed with the air (fresh air) taken in from an atmosphere.

An object of the present invention is to provide a control device for a cylinder fuel injection type internal combustion engine, in which the control device can provide an optimum fuel consumption and a stable combustion state by performing control to keep ignition always at an optimum timing such that ignition timing becomes MBT, without changing an EGR amount or an EGR rate that can realize the optimum fuel consumption rate.

### Solution to Problem

In order to achieve the above object, according to the present invention, in an internal combustion engine control device for controlling an internal combustion engine connected with a humidity sensor configured to detect humidity in an atmosphere and an ignition device configured to ignite an air-fuel mixture in a combustion chamber, the internal combustion engine control device includes: a moisture amount calculation part configured to calculate an amount of moisture contained in intake air flowing into the combustion chamber according to a detection value of the humidity sensor; and an ignition timing control part configured to control ignition timing of the ignition device. In the internal combustion engine control device, the ignition timing control part controls the ignition timing of the ignition device so as to move in an advance direction as the amount of moisture in intake air calculated by the moisture amount calculation part increases.

### Advantageous Effects of Invention

According to the present invention, in a spark ignition type internal combustion engine, even when an environment in the atmosphere and a state of the EGR recirculated to the intake pipe from the exhaust pipe are changed, the ignition timing can be always controlled to optimum ignition timing, improving stable combustion and fuel consumption performance.

The problems, configurations, and effects other than those described above will be clarified by the description of the embodiment below.

### Brief Description of Drawings

[FIG. 1] FIG. 1 is a schematic diagram of an entire configuration, showing one embodiment of a control system for a spark ignition type engine according to the present invention.
[FIG. 2] FIG. 2 is a block diagram showing one embodiment of an input/output signal relation of an engine control unit used in the control system of the spark ignition type engine according to the present invention.
[FIG. 3] FIG. 3 is a graph showing a relationship with a fuel consumption rate from an EGR rate and ignition timing.
[FIG. 4] FIG. 4 is a graph showing a relationship with combustion stability from an EGR rate and ignition timing.
[FIG. 5] FIG. 5 is a graph showing a relationship with the ignition timing to become MBT, from an amount of moisture in an atmosphere and an EGR rate.
[FIG. 6] FIG. 6 is an ignition control block diagram used in the spark ignition type engine control system according to the present invention.
[FIG. 7] FIG. 7 is a flowchart showing processing contents relating to setting of ignition timing shown in FIG. 6.
[FIG. 8] FIG. 8 is a flowchart for explaining an ignition-timing-correction-amount calculation part according to an amount of moisture in intake air in step 704.

### Description of Embodiments

Hereinafter, an embodiment of the present invention will be described in detail with reference to the drawings.

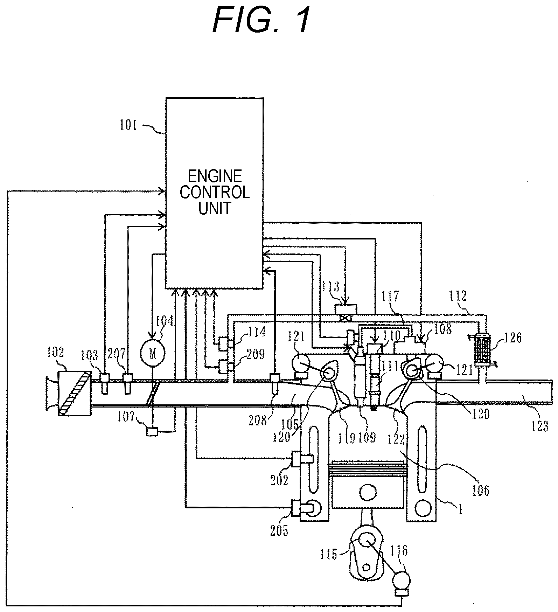

FIG. 1 is a schematic diagram of an entire configuration of a control system for a cylinder fuel injection type internal combustion engine 1, constituting one embodiment of the present invention. In the present embodiment, although it is described with a direct fuel injection type internal combustion engine (DI), it is not limited to DI, and is also applicable to an intake port fuel injection type internal combustion engine (PFI).

The intake air (fresh air) taken in from an inlet portion of an air cleaner 102 passes through a flow rate measurement part disposed with an intake air flow meter (air flow sensor) 103, and its flow rate is measured. Further, humidity in fresh air is measured by a humidity sensor 207 attached to or installed separately from the air flow sensor. Thereafter, the intake air passes through an electrically controlled throttle valve 104 configured to control an intake air flow rate, and after temperature of intake air is measured by an intake air temperature sensor 208 in an intake pipe, the intake air is distributed to an intake pipe 105 connected to each cylinder. After being distributed to the intake pipe 105, the intake air is introduced into a combustion chamber 106 through an intake valve 119 provided to the each cylinder. The combustion chamber 106 is formed by an inner wall surface of a cylinder 124 and a crown surface 125a of a piston 125 that reciprocates in the cylinder 124, and its volume is changed by reciprocating motion of the piston 125. From the intake air flow meter 103, an output signal representing the intake air flow rate is input to an engine control unit (ECU) 101. The electrically controlled throttle valve 104 is attached with a throttle opening sensor 107 configured to detect an opening degree of the electrically controlled throttle valve 104, and an output signal of the throttle opening sensor 107 is also input to the engine control unit 101.

Fuel is primarily pressurized by a low-pressure fuel pump (not shown) and then secondary pressurized to a higher pressure by a high-pressure fuel pump 108. Then, the fuel is injected into the combustion chamber 106 via a common rail 117, from a fuel injection valve (injector) 109 provided to the each cylinder. The fuel injected into the combustion chamber 106 generates an air-fuel mixture with the intake air, is ignited by a spark plug 111 with ignition energy from an ignition coil 110, and burns in the combustion chamber 106.

The exhaust gas generated by the combustion of the air-fuel mixture is discharged from the combustion chamber 106 to an exhaust pipe 123 through an exhaust valve 122 provided to the each cylinder. An EGR outlet of an exhaust gas recirculation (EGR) device is formed in a middle of the exhaust pipe 123. A part of the exhaust gas (EGR gas) flowing through the exhaust pipe 123 flows from the EGR inlet to the EGR cooler 126 and is cooled, then, flows through an EGR pipe 112 to an EGR control valve 113, and flows back into the intake pipe 105 via the EGR introduction port.

The EGR gas flow rate is regulated by the EGR control valve 113. In the EGR pipe 112, an EGR gas flow rate sensor 114 configured to measure the EGR gas flow rate is attached. An output signal (flow rate detection signal) of the EGR gas flow rate sensor 114 is input to the engine control unit 101.

A crank angle sensor 116 attached to a crankshaft 115 of the engine outputs a signal indicating a rotational position of the crankshaft 115, to the engine control unit 101.

A cam angle sensor 121 attached to a camshaft 120 of the engine outputs a signal indicating a rotational position of the camshaft, to the engine control unit 101. The camshaft 120 and the cam angle sensor 121 are provided for each of the intake valve 119 and the exhaust valve 122.

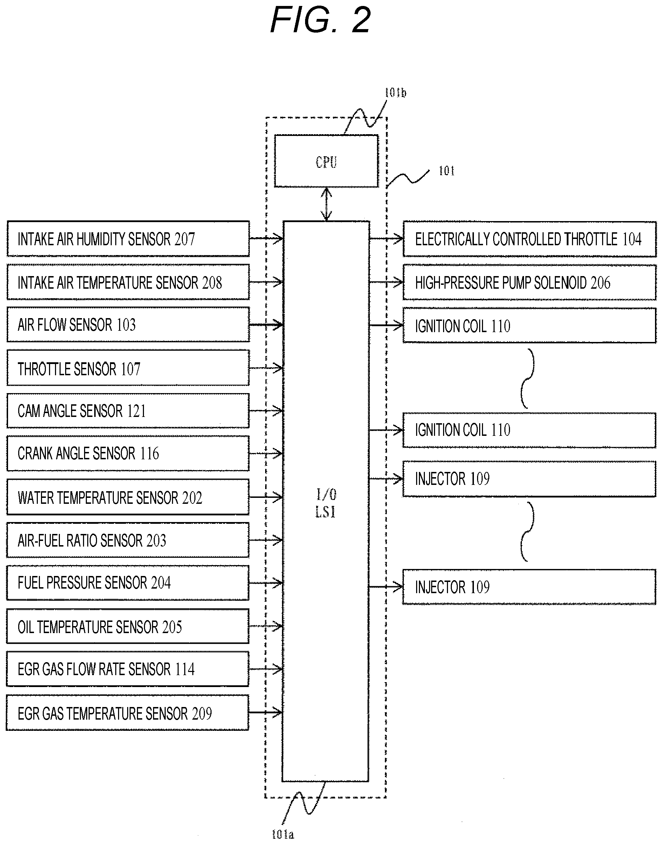

Fig. 2 shows an input/output relationship of the engine control unit.

The engine control unit 101 is constituted by an I/O LSI 101a including an A/D converter 101a-1, a central processing unit (CPU) 101b configured to execute arithmetic processing, and the like. The engine control unit 101 executes predetermined arithmetic processing by taking signals from various sensors and the like as inputs, including the air flow sensor 103, a throttle sensor 107, the cam angle sensor 121, the crank angle sensor 116, a water temperature sensor 202, an air-fuel ratio sensor 203, a fuel pressure sensor 204, an oil temperature sensor 205, and the EGR gas flow rate sensor 114. The calculated arithmetic result is supplied as a control signal to the electrically controlled throttle valve 104, the high-pressure pump solenoid 206, the ignition coil 110, and a plurality of injectors 109, which are actuators, and control of fuel combustion pressure inside the common rail, fuel injection amount control, ignition timing control, and the like are executed. The I/O LSI 101a is provided with a drive circuit 101a-2 configured to drive each of the injectors 109. The drive circuit 101a-2 boosts the voltage supplied from a battery with a boosting circuit (not shown), and supplies to each of the injectors 109 by controlling a current with an integrated circuit (IC) (not shown) to drive each of the injectors 109.

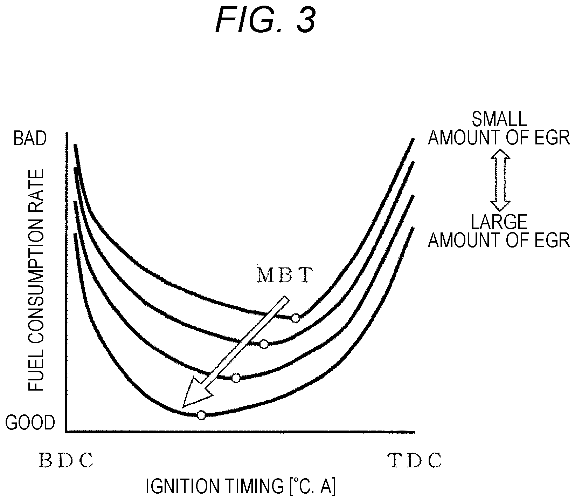

A relationship with a fuel consumption rate from an EGR rate and ignition timing will be described with reference to FIG. 3.

The EGR rate indicates a ratio of the EGR gas contained in intake air flowing into the combustion chamber 106. As compared with a case where the EGR rate is low (including 0% in which EGR is cut and the EGR gas is not recirculated), pumping loss decreases and a fuel consumption rate reduction effect is obtained as the EGR rate increases. At this time, if the ignition timing is kept constant, a burning speed decreases due to inert gas contained in the exhaust gas, preventing drawing out a fuel economy effect by the reduction of the pumping loss. Accordingly, it is possible to derive the fuel economy effect by quickening (advancing) the ignition timing in order to advance combustion start timing as much as the combustion speed decreases.

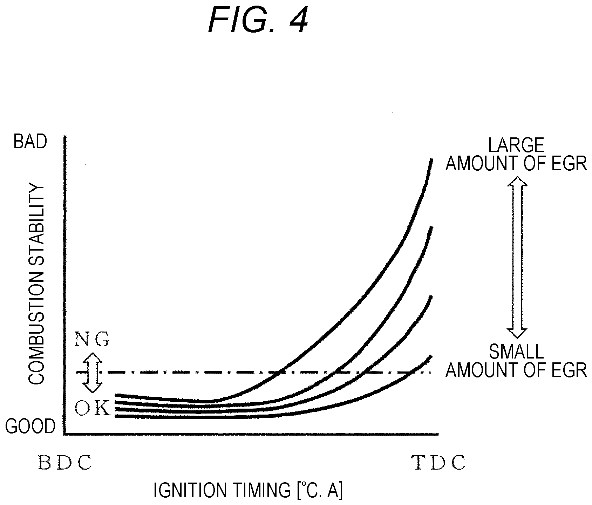

A relationship with combustion stability from an EGR rate and ignition timing will be described with reference to FIG. 4. For the combustion stability, similarly to the fuel consumption rate, a burning speed decreases to deteriorate the combustion stability as the EGR rate increases, as compared with a case where the EGR rate is low (including 0% where the EGR is cut and the EGR gas is not recirculated). Vibrations and sounds due to deterioration of combustion stability are transmitted to a driver through a body and the like of the car, which gives the driver uncomfortable feeling and may significantly impair merchantability of the car. Therefore, similarly to the fuel consumption rate, deterioration of combustion stability is prevented by quickening (advancing) the ignition timing in order to advance the combustion start timing as much as the combustion speed decreases.

In FIG. 4, a top dead center TDC at a crank angle is 0°, a bottom dead center BDC is 180°, and an angle reaching the top dead center TDC again is 360°. The top dead center TDC at the crank angle coincides with a top dead center TDC of the piston 125, and the bottom dead center BDC at the crank angle coincides with a bottom dead center BDC of the piston 125.

In the present embodiment, an intake stroke is a period during which the piston 125 reaches from the top dead center TDC to the bottom dead center BDC, and a compression stroke is a period during which the piston 125 reaches from the bottom dead center BDC to the top dead center TDC. A combustion stroke is a period during which the air-fuel mixture ignited by the spark plug 111 burns. However, in consideration of a time lag of flame propagation to the air-fuel mixture, the ignition timing may be set before the top dead center in the compression stroke. In this case, the combustion stroke starts before the top dead center and overlaps with the compression stroke defined as described above, in a part of the period.

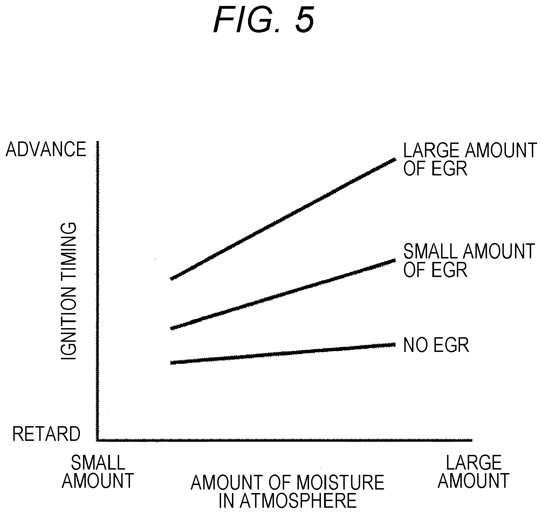

With reference to FIG. 5, a relationship between an amount of moisture contained in the atmosphere taken into the engine and the fuel consumption rate will be described.

Ignition timing to become MBT is greatly affected by an amount of moisture contained in the air (fresh air) taken into the engine. When the amount of moisture in the fresh air is large, the ignition timing to become the MBT changes toward an advance side as compared with a case where the amount of moisture in the fresh air is small.

Further, a variation of the ignition timing to become the MBT due to the amount of moisture in the fresh air also varies depending on the EGR rate recirculated from the exhaust pipe to the intake pipe at that time. When the EGR rate is high, the variation increases as compared with a case where the EGR rate is low.

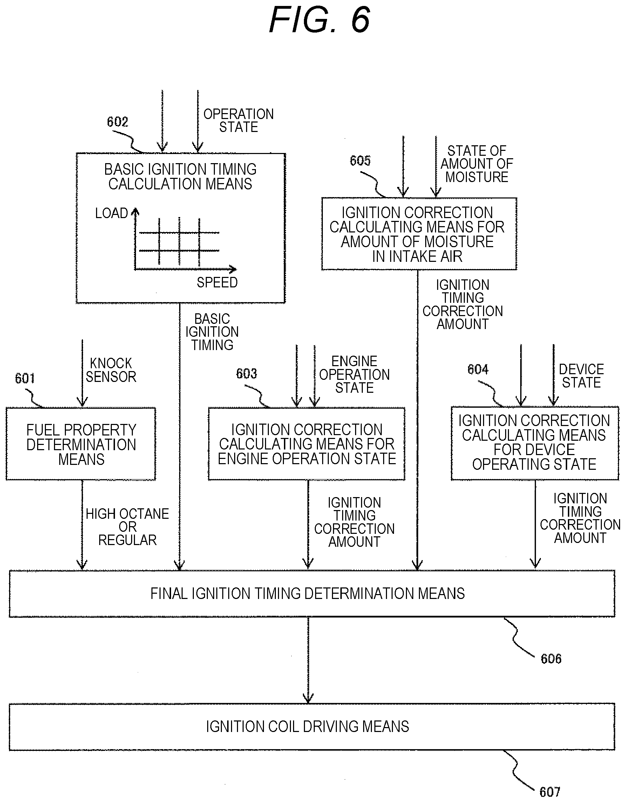

An outline of the ignition timing control according to the present embodiment will be described with reference to FIG. 6. FIG. 6 is one aspect of a control block diagram of the ignition coil 110, which is performed by the CPU 101b of the control unit 101 having an ignition coil control device.

The ignition coil control device includes: a fuel property determination part 601 configured to determine property of fuel being supplied to the engine; a basic ignition timing calculation part 602 configured to calculate optimum ignition timing at an operating point, from an engine speed and an engine load; an ignition timing correction part 603 corresponding to an operation state of the engine; an ignition timing correction part 604 corresponding to an operating state of various devices such as the EGR; and an ignition timing correction part 605 corresponding to an amount of moisture contained in intake air taken into the combustion chamber 106. Further, the ignition coil control device is constituted by a final ignition timing determination part 606 configured to integrate all of the above and determine, and an ignition coil driving part 607 configured to give a drive current to the ignition coil.

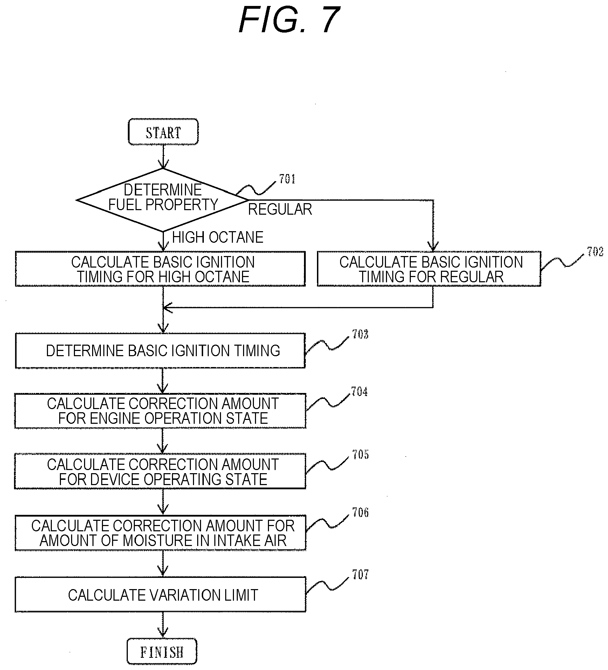

Specific control contents (control flow) of the ignition timing control of the internal combustion engine according to the present embodiment will be described with reference to FIG. 7.

FIG. 7 is a flowchart showing control contents of one embodiment of the ignition timing control according to the present invention.

The control flow shown in FIG. 7 is programmed in the CPU of the engine control unit 101 and repeatedly executed at a predetermined cycle. The engine control unit 101 supplies a predetermined control signal to each ignition coil on a basis of final ignition timing calculated with processing contents of FIG. 6, and performs one ignition during one combustion cycle. In the following description, the ignition timing is an amount corresponding to an angle, and in the present embodiment, it is an amount corresponding to a crank angle in particular.

In step 701, the property of the fuel being supplied to the engine is determined. Here, an octane number of the fuel is detected, and it is determined whether the fuel being supplied is high octane or regular. In addition to a fuel property sensor (not shown) configured to directly detect the octane number, the octane number is determined from, for example, knocking occurrence frequency and knocking magnitude (level) when knocking occurs, by using a knock sensor (not shown).

In step 702, basic ignition timing according to an operation state of the engine is calculated. For example, the calculation is stored in advance in the CPU of the engine control unit 101 for each octane number of high octane and regular, and is searched from data mapped with engine speed and a parameter indicating an engine load.

In step 703, the basic ignition timing is determined from the fuel being supplied and an operation state of the engine.

In step 704, a correction value of the ignition timing is calculated according to an engine state such as an engine cooling water temperature 202 detected by the water temperature sensor, and an engine lubricating oil temperature detected by the oil temperature sensor 205.

In step 705, the correction value of the ignition timing is calculated according to an operating state of the various devices mounted to the engine. The devices include a variable valve timing mechanism (not shown) configured to change a valve timing, a variable air passage mechanism (not shown) configured to change air flow characteristics such as a tumble flow and a swirl flow of intake air flowing into the combustion chamber 106, and the like.

In step 706, the ignition timing is corrected according to an amount of moisture contained in intake air flowing into the combustion chamber 106. The amount of moisture in intake air is calculated, based on an amount of moisture detected by the humidity sensor 207 provided to an atmospheric air introduction part, from an intake air temperature immediately before the combustion chamber 106, detected by an intake air temperature sensor 208, and an amount of moisture in the EGR gas recirculated from the exhaust pipe 123.

In step 707, the final ignition timing is determined by integrating the correction values from the ignition timing correction values calculated in steps 704 to 706.

In step 708, a drive current of the ignition coil 110 is controlled based on the ignition timing determined in step 707, and the air-fuel mixture in the combustion chamber 106 is ignited by the spark plug 111 at a desired timing.

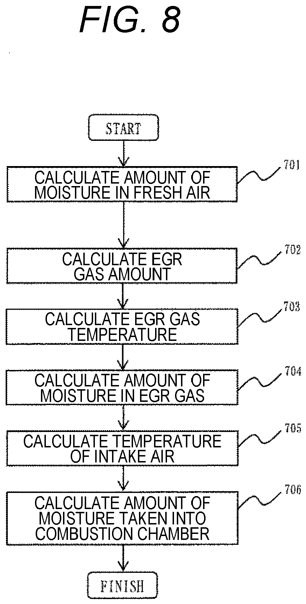

With reference to FIG. 8, an ignition-timing-correction-amount calculation part according to the amount of moisture in intake air in step 704 described above will be described in more detail.

In step 801, an amount of moisture in intake air taken into the engine from the atmosphere is measured by the humidity sensor 207. While there are humidity sensors that measure only humidity, those combined with a temperature sensor, and those combined with an air flow sensor that measures an intake air amount, any type of humidity sensors may be used.

Further, although the humidity sensor is preferably an absolute humidity sensor, a relative humidity sensor may be used, and any relative humidity sensor may be used as long as it is combined with a temperature sensor and a pressure sensor.

In step 802, the EGR gas amount is calculated. In the present embodiment, while an EGR flow rate sensor 114 is used for measuring, measurement may be performed with a combination of a temperature sensor and a pressure sensor including a differential pressure. Further, the EGR gas amount may be estimated from an opening amount or an opening ratio of the EGR control valve.

In step 803, an EGR gas temperature sensor 209 provided to the EGR pipe 112 detects EGR gas temperature.

In step 804, an amount of moisture in the EGR gas is calculated. The amount of moisture in the EGR gas is calculated from the EGR gas amount calculated in step 802 described above and the EGR gas temperature detected in step 803 described above. Further, measuring pressure of the EGR pipe further improves flow rate measurement accuracy.

In step 805, temperature of intake air taken into the combustion chamber 106 is detected by the intake air temperature sensor 208. For the temperature of intake air, temperature is detected at which fresh air drawn in from the atmosphere is mixed with the EGR gas recirculated from the exhaust pipe.

In step 806, an amount of moisture in intake air including the EGR gas flowing into the combustion chamber 106 is calculated. An amount of moisture finally taken into the combustion chamber 106 is calculated based on the amount of moisture in the atmosphere detected in step 806 described above, the amount of moisture in the EGR gas calculated in step 804 described above, and the temperature of intake air detected in step 805 described above.

As described above, the internal combustion engine control device 101 of the present embodiment controls the internal combustion engine 1 connected with the humidity sensor 207 configured to detect humidity in the atmosphere, and the ignition device (the ignition coil 110 and the spark plug 111) configured to ignite the air-fuel mixture inside the combustion chamber 106. Then, the internal combustion engine control device 101 includes the moisture amount calculation part configured to calculate an amount of moisture contained in intake air flowing into the combustion chamber 106 according to a detection value of the humidity sensor 207; and the ignition timing control part (final ignition timing determination part 606) configured to control the ignition timing of the ignition device. By determining the correction amount of the ignition timing according to the amount of moisture with the ignition timing correction part 605, the ignition timing control part (final ignition timing determination part 606) controls the ignition timing of the ignition device (the ignition coil 110 and the spark plug 111) so as to move in the advance direction as the amount of moisture in intake air calculated by the moisture amount calculation part increases.

The internal combustion engine 1 according to this embodiment is connected to the exhaust gas recirculation part (EGR pipe 112) configured to recirculate a part of the exhaust gas in the exhaust pipe 123 into the intake pipe 105, and the moisture contained in intake air flowing into the combustion chamber 106 is corrected according to a state of recirculation gas (EGR gas) recirculated by the exhaust gas recirculation part (EGR pipe 112).

Further, the ignition timing control part (final ignition timing determination part 606) performs control such that, with respect to a first ignition timing of the ignition device (the ignition coil 110 and the spark plug 111) in a case where the amount of moisture in intake air calculated by the moisture amount calculation part is a first calculated value, a second ignition timing of the ignition device (the ignition coil 110 and the spark plug 111) moves in the advance direction in a case where the amount of moisture in intake air calculated by the moisture amount calculation part is a second calculated value larger than the first calculated value.

In addition, the moisture amount calculation part calculates an amount of moisture contained in intake air flowing into the combustion chamber 106 based on an atmospheric humidity detected by the humidity sensor 207, an amount of moisture contained in recirculation gas (EGR gas) recirculated by the exhaust gas recirculation part (EGR pipe 112), and an intake air temperature downstream of the introduction part of the exhaust gas recirculation part (EGR pipe 112) in the intake pipe 105.

The amount of moisture contained in the recirculation gas recirculated by the exhaust gas recirculation part (EGR pipe 112) is calculated from a temperature of the recirculation gas (EGR gas) and an amount of the recirculation gas (EGR gas).

In a case where the amount of moisture in intake air calculated by the moisture amount calculation part is a constant value, the ignition timing control part (final ignition timing determination part 606) performs control to change the correction amount of the ignition timing of the ignition device (the ignition coil 110 and the spark plug 111) when a load of the internal combustion engine 1 changes.

In the case where the amount of moisture in intake air calculated by the moisture amount calculation part is a constant value, the ignition timing control part (final ignition timing determination part 606) performs control to reduce the correction amount of the ignition timing of the ignition device (the ignition coil 110 and the spark plug 111) when the load of the internal combustion engine 1 increases.

In the case where the amount of moisture in intake air calculated by the moisture amount calculation part is a constant value, the ignition timing control part (final ignition timing determination part 606) performs control such that, with respect to a first correction amount of the ignition timing of the ignition device when a load of the internal combustion engine 1 is a first detection value, a second correction amount of the ignition timing of the ignition device moves in a decreasing direction when the load of the internal combustion engine 1 is a second detection value larger than the first detection value.

The ignition timing control part (final ignition timing determination part 606) performs control such that, with respect to a correction speed per unit time of the ignition timing of the internal combustion engine 1 in a case where the second calculated value smaller than the first calculated value is detected after the first calculated value is calculated from the amount of moisture calculated by the moisture amount calculation part, the correction speed per unit time of the ignition timing of the internal combustion engine 1 is reduced in a case where the first calculated value is detected after the second calculated value is calculated from the amount of moisture calculated by the moisture amount calculation part.

In this manner, by calculating an amount of moisture taken into the combustion chamber and controlling the ignition timing to optimum ignition timing according to the amount of moisture, the fuel economy can be improved without changing the target optimum EGR amount or EGR rate, and without deteriorating operability.

Note that the present invention is not limited to the above embodiment, and various modifications may be included. For example, the examples described above have been illustrated in detail to facilitate description for easy understanding, and are not necessarily limited to the examples that include all the configurations. Moreover, a part of a configuration of each embodiment may be deleted, replaced, added with another configuration.

### Reference Signs List

- 1: cylinder fuel injection type internal combustion engine
- 101: engine control unit
- 101a: I/O LSI
- 101a-1: A/D converter
- 101a-2: drive circuit
- 101b: CPU
- 102: air cleaner
- 103: air flow sensor
- 104: electrically controlled throttle valve
- 105: intake pipe
- 106: combustion chamber
- 107: throttle sensor
- 108: high-pressure fuel pump
- 109: injector (fuel injection valve)
- 110: ignition coil
- 111: spark plug
- 112: EGR pipe
- 113: EGR control valve
- 114: EGR flow rate sensor
- 115: crankshaft
- 116: crank angle sensor
- 117: common rail
- 119: intake valve
- 120: camshaft
- 121: cam angle sensor
- 122: exhaust valve
- 123: exhaust pipe
- 124: cylinder
- 125: piston
- 126: EGR cooler
- 202: water temperature sensor
- 203: air-fuel ratio sensor
- 204: fuel pressure sensor
- 205: oil temperature sensor
- 206: high-pressure pump solenoid
- 207: humidity sensor
- 208: intake air temperature sensor
- 209: EGR gas temperature sensor

## Claims

1. An internal combustion engine control device for controlling an internal combustion engine connected with a humidity sensor configured to detect humidity in an atmosphere and an ignition device configured to ignite an air-fuel mixture in a combustion chamber, the internal combustion engine control device comprising:
a moisture amount calculation part configured to calculate an amount of moisture contained in intake air flowing into the combustion chamber according to a detection value of the humidity sensor; and
an ignition timing control part configured to control ignition timing of the ignition device, wherein
the ignition timing control part controls the ignition timing of the ignition device so as to move in an advance direction as the amount of moisture in intake air calculated by the moisture amount calculation part increases.

2. The internal combustion engine control device according to claim 1, wherein
the internal combustion engine is connected to an exhaust gas recirculation part configured to recirculate a part of the exhaust gas in an exhaust pipe into an intake pipe; and
a combustion chamber intake air moisture amount that is an amount of moisture contained in intake air flowing into the combustion chamber is corrected according to a state of recirculation gas recirculated by the exhaust gas recirculation part.

3. The internal combustion engine control device according to claim 1 or 2, wherein
the ignition timing control part performs control such that, with respect to a first ignition timing of the ignition device in a case where the amount of moisture in intake air calculated by the moisture amount calculation part is a first calculated value, a second ignition timing of the ignition device moves in an advance direction in a case where the amount of moisture in intake air calculated by the moisture amount calculation part is a second calculated value larger than the first calculated value.

4. The internal combustion engine control device according to claim 1, wherein
the moisture amount calculation part calculates an amount of moisture contained in intake air flowing into the combustion chamber based on an atmospheric humidity detected by the humidity sensor, an amount of moisture contained in recirculation gas recirculated by the exhaust gas recirculation part, and an intake air temperature downstream of an introduction part of the exhaust gas recirculation part in the intake pipe.

5. The internal combustion engine control device according to claim 4, wherein
an amount of moisture contained in the recirculation gas recirculated by the exhaust gas recirculation part is calculated from temperature of the recirculation gas and an amount of the recirculation gas.

6. The internal combustion engine control device according to claim 1 or 2, wherein
in a case where the amount of moisture in intake air calculated by the moisture amount calculation part is a constant value, the ignition timing control part performs control to change a correction amount of the ignition timing when a load of the internal combustion engine changes.

7. The internal combustion engine control device according to claim 1 or 2, wherein
in a case where the amount of moisture in intake air calculated by the moisture amount calculation part is a constant value, the ignition timing control part performs control to reduce a correction amount of the ignition timing when a load of the internal combustion engine increases.

8. The internal combustion engine control device according to claim 1 or 2, wherein
in a case where the amount of moisture in intake air calculated by the moisture amount calculation part is a constant value, the ignition timing control part performs control such that, with respect to a first correction amount of ignition timing of the ignition device when a load of the internal combustion engine is a first detection value, a second correction amount of ignition timing of the ignition device moves in a decreasing direction when a load of the internal combustion engine is a second detection value larger than the first detection value.

9. An internal combustion engine control device for controlling an internal combustion engine connected with a humidity sensor configured to detect humidity in an atmosphere and an ignition device configured to ignite an air-fuel mixture in a combustion chamber, the internal combustion engine control device comprising:
a moisture amount calculation part configured to calculate an amount of moisture contained in intake air flowing into the combustion chamber according to a detection value of the humidity sensor; and
an ignition timing control part configured to control ignition timing of the ignition device so as to move in an advance direction as the amount of moisture calculated by the moisture amount calculation part increases, wherein
the ignition timing control part performs control such that, with respect to a correction speed per unit time of ignition timing of the internal combustion engine in a case where a second calculated value smaller than a first calculated value is detected after the first calculated value is calculated from the amount of moisture calculated by the moisture amount calculation part, the correction speed per unit time of the ignition timing of the internal combustion engine is reduced in a case where the first calculated value is detected after the second calculated value is calculated from the amount of moisture calculated by the moisture amount calculation part.
